# EUROPEAN PATENT SPECIFICATION

(11) **EP 4 215 310 B1**
(45) Date of publication and mention of the grant of the patent: **04.11.2026**
(21) Application number: 21868945.3
(22) Date of filing: 24.05.2021
(51) Int. Cl.: B23Q 11/00, B01D 33/06, B01D 33/50, B01D 33/76

(54) **SPIRAL CONVEYOR**
SPIRALFÖRDERER
TRANSPORTEUR EN SPIRALE

(30) Priority: 17.09.2020 JP 2020156313
(43) Date of publication of application: 26.07.2023
(73) Proprietor: Tokyo Seimitsu Hatsujo Co., Ltd., Yokohama-shi, Kanagawa 224-0045 (JP)
(72) Inventor: MAEDA, Takaaki, Yokohama-shi, Kanagawa 224-0045 (JP); WATANUKI, Yoshio, Yokohama-shi, Kanagawa 224-0045 (JP)
(74) Representative: Potter Clarkson
(86) International application number: PCT/JP2021/019573
(87) International publication number: WO 2022/059258

(56) References cited:
- JP-A- 2020 171 988
- JP-A- H09 201 739
- JP-B2- 3 228 029
- JP-B2- 5 433 823
- JP-U- S56 118 709

## Description

### Field of Art

The present invention relates to a spiral conveyor suitable for conveyance of chips or scrapes which are generated in the course of metal cutting process.

### Background Art

A spiral conveyor 1, which has been known as a kind of conveyors, is shown by way of example in Patent Document 1, in Non-Patent Document 1 and Fig.5 , wherein a conveyance spiral 3 like a coil spring is received in a tray 2 and driven by a motor 4 with a decelerator to be rotated at a low speed in a predetermined direction, thereby conveying chips 5, which have been thrown into the tray 2, in a predetermined direction within the tray 2, and then discharged toward a discharge duct 6 connected to an exit of the tray 2. Cutting fluid 7 is thrown into the tray 2 together with chips 5, which will fall down into a cutting fluid tank 8 positioned beneath the tray 2, while being conveyed within the tray 2.

Such spiral conveyor having the above-described construction has been widely used in various machine tools, because it is capable of smoothly conveying chips of various shapes, sizes and materials, from largely-expanded long-chain-shaped continuous chips or scrapes to needle-like fine chips or scrapes, it has a simple structure and can be manufactured and provided at a low cost, it will achieve long-distance conveyance of the chips or scrapes in a machining process wherein various machine tools are connected to each other, it is possible to efficiently separate and collect the cutting fluid which has been adhered to the chips or scrapes, etc.

Additionally, Japanese patent JP3228029B2 discloses a chip transfer device with the purpose of having the capability of sufficiently and properly separating a chip and a cutting lubricant from each other. This device has an outer case pipe 10 with openings 13 in the downstream zone of a chip tray 11 and a screw 20 housed in the pipe 10. Furthermore, the outer case pipe 10 is provided with a window 31A, 31B or the like loosely coupled so as to be freely rotatable in such state as covering the opening 13A, 13B or the like and becoming faced thereto at the time of rotation. In addition, punching metal is fitted to the external surface of the pipe 10 for closing the window 31A, 31B or the like. Also, a drum 30 is provided for cutting chips in collaboration with the edges of the winnow 31A, 31B or the like and the opening 13A, 13B or the like under rotation.

### Prior Arts Patent Documents

Patent Document 1: Japanese Patent Publication No. 2018-001400A

### Non-Patent Documents

Non-Patent Document 1: http://www.to-hatsu.co.jp/products/sc_built.html

### Summary of Invention Problems to be Solved by Invention

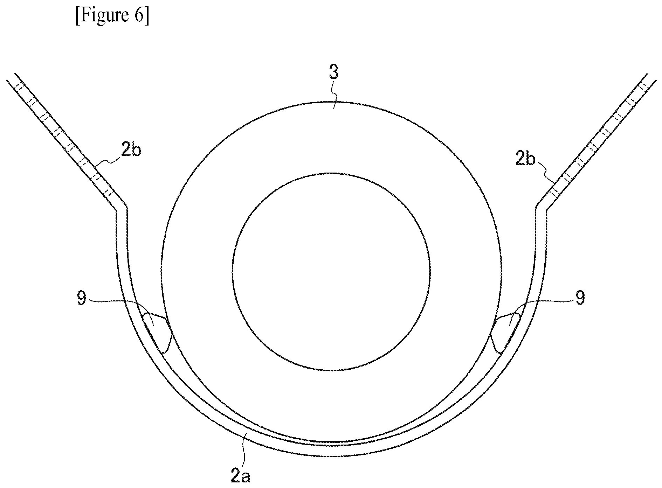

The conventional spiral conveyor 1 has a tray 2 having a shape such as shown in Fig.6. More particularly, the tray 2 has a curved bottom section 2a for receiving the conveyance spiral 3 and a pair of slanting sections 2b, 2b extending in obliquely upward directions from the opposite ends of the curved bottom portion. The slanting sections 2b, 2b will act as guide plates so that the chips or scrapes 5 falling down onto the said sections may be smoothly transferred by their own weights toward the conveyance section of the conveyance spiral 3. When they are made of perforated metal plates, they will also act as filters. The cutting fluid 7 will fall down through the perforations of the metal plate to be collected in the cutting fluid tank 8.

However, such conventional filter will likely be clogged. Especially, when chips or scrapes 5 of relatively lightweight aluminum material should fall onto the slanting sections 2b, 2b, they could not easily be moved by their own weights toward the conveyance section, which would rather tend to be accumulated thereat to cause clogging.

Accordingly, in view of the above-described backgrounds, the problem to be solved by the present invention is to provide a spiral conveyor with a filter which is capable of preventing clogging irrespective of material and shape of chips or scrapes to be processed. Another problem to be solved by the present invention is to provide a filter unit which is easily retro-attachable to an existing spiral conveyor.

### Means for Solving the Problems

To solve the above-described problems, an invention according to the appended claims is provided.

### Advantages of Invention

In accordance with claim 1 of the present invention, the filter unit including combination of the primary filter and the secondary filter is connected between the tray and the discharge duct, so that chips or scrapes thrown into the tray can be smoothly conveyed toward the discharge duct by the conveyance spiral, while preventing clogging of the chips or scrapes to the filter. The chips or scrapes captured by the primary filter are scraped by the rotating conveyance spiral to be back to the conveyance path, whereas the chips or scrapes passing through the primary filter and captured by the secondary filter is removed by the washing nozzles to be back to the conveyance path, without being clogged.

In accordance with claim 1 of the present invention, among chips or scrapes thrown into the tray, relatively larger size chips or scrapes that cannot pass through the primary filter will be captured by the primary filter, and relatively smaller size chips or scrapes that can pass through the primary filter will be captured by the secondary filter, so that the chips or scrapes may be sieved sequentially according to their sizes.

In accordance with claim 2 of the present invention, suitable materials for the primary filter and the secondary filter are provided. Both the perforated metal and the mesh filter are widely put on the market and easily available at low prices.

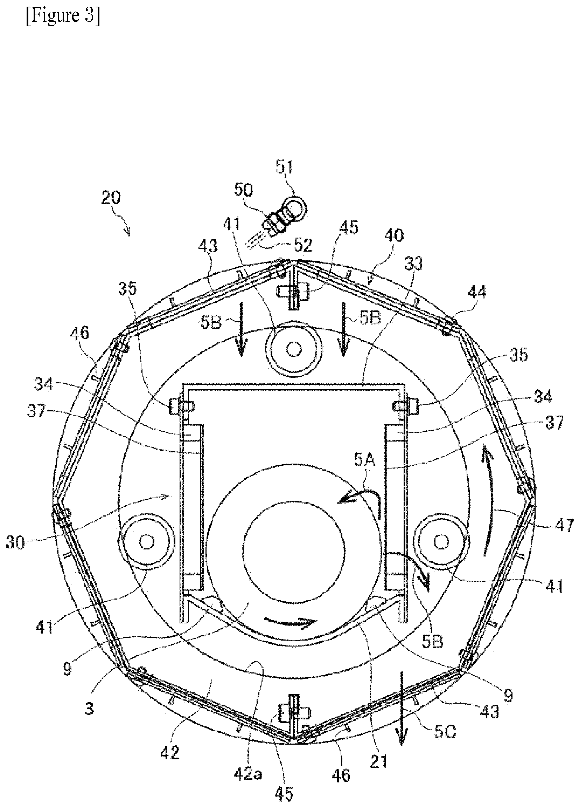

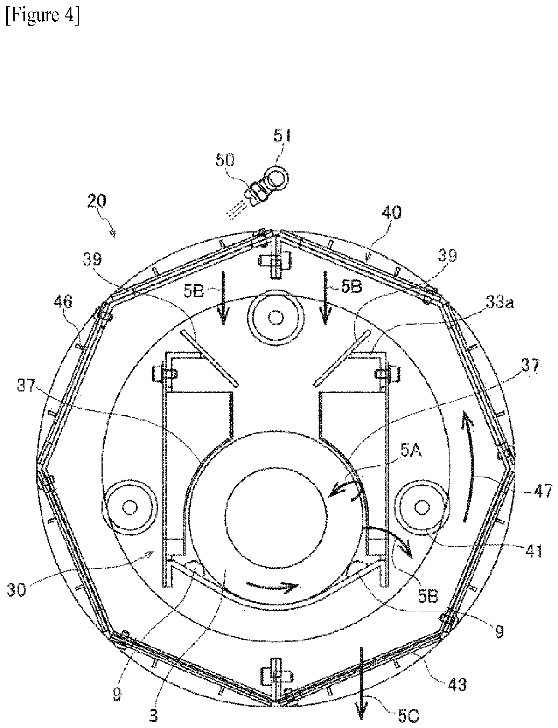

In accordance with claim 1 of the present invention, a suitable design for the primary filter is provided. The two filter members arranged in opposite sides of the conveyance spiral with small gaps thereto may be upstanding ones at said positions (see Fig.3) or arcuate ones extending along the outer periphery of the conveyance spiral (see Fig.4).

In accordance with claim 3 of the present invention, a suitable design for the secondary filter rotatable is provided. The ring-shaped rotating disc is rotatably supported by the free-rotating rollers engaging the inner periphery thereof, so that the secondary filter secured to the rotating disc will rotate theretogether.

In accordance with claim 4 of the present invention, a suitable design for rotating the secondary filter is provided. The secondary filter will automatically rotate by a rotational energy obtainable by the vanes on the outer periphery thereof onto which the washing liquid from the washing nozzle is sprayed, which will require no drive source for rotation such as motor.

In accordance with claim 5 of the present invention, the washing liquid is sprayed in an obliquely downward direction from the washing nozzles positioned substantially just above the secondary filter onto the top of the secondary filter, which makes it possible to rotate the secondary filter in a predetermined direction that depends on the spraying direction. Furthermore, the relatively smaller size chips or scrapes captured by the secondary filter may be smoothly removed therefrom to fall down by the washing liquid sprayed from the washing nozzles and also by their own weight, which will achieve more improved effect of clogging prevention.

In accordance with claim 6 of the present invention, the filter unit is mounted continuously and integrally with the exit of the tray, which will be well applicable when newly manufacturing a spiral conveyor coupled in advance with the filter unit.

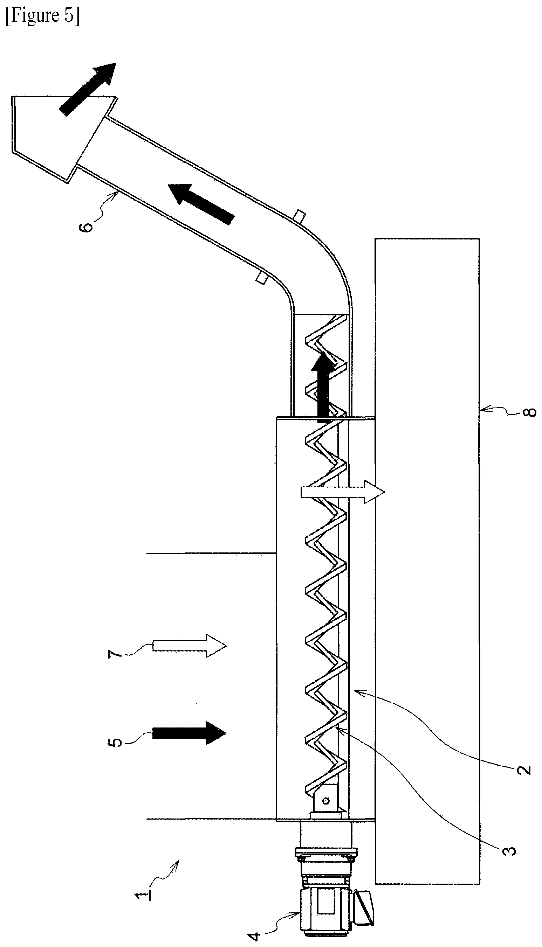

In accordance with claim 7 of the present invention, the filter unit may be afterward incorporated to the existing spiral conveyor (Fig.5) of conventional design wherein the discharge duct is connected to the exit of the tray, which may impart an additional value to the existing spiral conveyor.

### Brief Description of Drawings

[Fig.1] an overall side view of a spiral conveyor according to an embodiment (Embodiment 1) of the present invention.
[Fig.2] a side view of a filter unit mounted between a tray and a discharge duct in this spiral conveyor, wherein illustration of a secondary filter positioned in the front side is omitted.
[Fig.3] a cross-section of this filter unit taken along A-A line in Fig.2.
[Fig.4] a cross-section of a filter unit according to another embodiment (Embodiment 2) of the present invention, which is illustrated in the same manner as in Fig.3.
[Fig.5] an overall side view of a conventional spiral conveyor.
[Fig.6] a cross-section of the prior art spiral conveyor taken along B-B line in Fig.5.

### Embodiments of Invention

A spiral conveyor and a filter unit according to the present invention will be described in detail by reference to embodiments.

### Embodiment 1

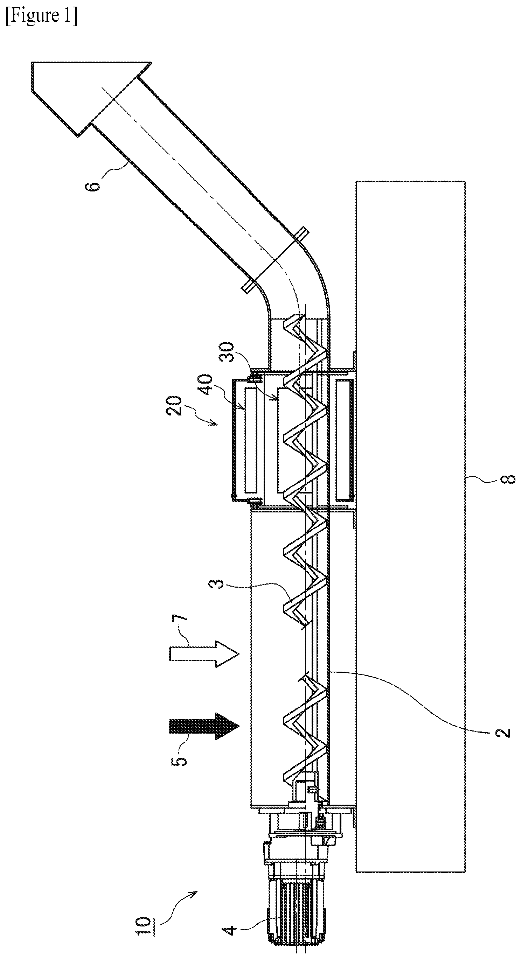

A spiral conveyor according to an embodiment (Embodiment 1) of the present invention will be described in reference to Figs.1 to 3. This spiral conveyor 10 has the same basic structure as that of the spiral conveyor 1 of Fig.5 and its basic operation and function is also the same as those having been described in connection with Fig.5, so that the members and elements identical or corresponding to those in the spiral conveyor of Fig.5 are shown by the same reference numerals. However, this spiral conveyor is significantly different from the prior art one in that a filter unit 20 is arranged between the tray 2 and the discharge duct 6. The conveyance spiral 3 extends through the tray 2 and the filter unit 20 to a halfway position (that is, a horizontal section adjacent to the filter unit 20) of the discharge duct 6. An extension tray 21 is connected to the tray 2 to extend through the filter unit 20.

The filter unit 20 shown in this embodiment is installed between the tray 2 and the discharge duct 6 by using a tray-side attachment plate 22 secured at the exit end of the tray 2 by bolt or the like to a cover plate (not shown) extending in a widthwise direction (that is a direction orthogonal to the sheet of Fig.1) to partially close the open surface of the cutting fluid tank 8, and a duct-side attachment plate 23 secured at the inlet end of the discharge duct 6 by bolt of the like to the cover plate of the liquid fluid tank 8.

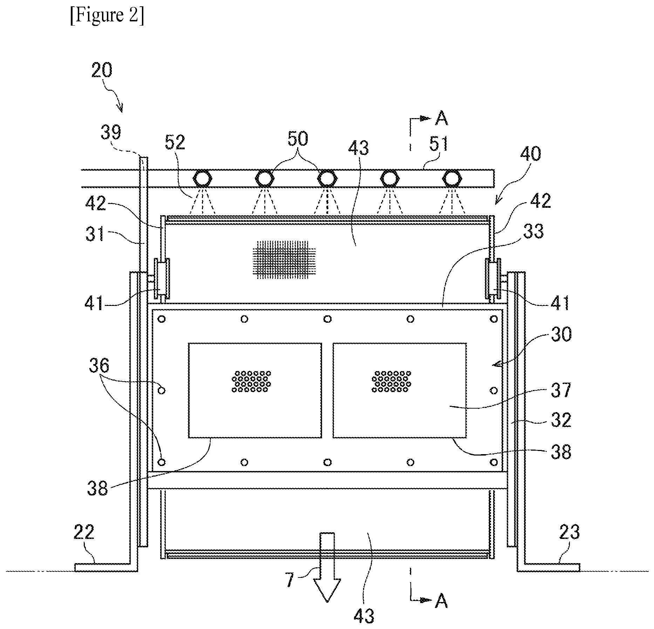

Between the tray-side attachment plate 22 and the duct-side attachment plate 23 is installed a primary filter structure 30. In this embodiment, the primary filter structure 30 comprises a tray-side vertical plate 31 (having a height larger than a duct-side vertical plate 32) secured by bolts (not shown) to the inner wall of the tray-side attachment plate 22, a duct-side vertical plate 32 secured by bolts (not shown) to the inner wall of the duct-side attachment plate 23, a filter frame 33 of a U-shaped cross-section welded to these vertical plates like a bridge therebetween, and perforated metal plates 37 secured by bolts 35 (only bolts 35 for securing the upper ends are shown in Fig.3, whereas, in Fig.2, bolts 35 are not shown but through-holes 36 for passing the bolts 35 therethrough are shown) to the inside of the filter frame 33 with spacers 34 therebetween.

The side wall of the filter frame 33 has a large central opening, so that relatively smaller chips or scrapes (such as sludge) which have passed through the perforated metal plate 37 may smoothly move toward the outside of the filter frame 33. Although each side wall of the filter frame 33 has a pair of openings 38 arranged in a row in this embodiment, these openings may be connected to form an integral opening 38. The shape of the opening will not be limited to a rectangle, which may also be a circle or ellipse, for example.

The perforated metal plate 37 has external shape and dimension almost identical to the side wall of the filter frame 33, which is secured to the inner wall of the peripheral portions of the filter frame 33 by the bolts 35, as described above. In this fixed condition, a pair of the perforated metal plates stand upright at opposite positions, while giving small gaps in the direction of conveyance at opposite sides of the conveyance spiral 33 extending through the interior of the filter unit 20 (Fig.3). By way of example, the perforated metal sheet 37 may be made by a stainless steel plate having a large number of circular perforations of 3mm diameter at each 5mm interval on the almost entire surface area thereof. However, the interval, diameter, shape and the like of the perforations will be designed depending upon the size and shape of the chips or scrapes 5 to be conveyed. The shape of the perforations is not limited to a circle, which may also be a slotted hole or slit, for example.

A secondary filter structure 40 is arranged to surround the conveyance zone including the extension tray 21 and the primary filter structure 30. In this embodiment, the secondary filter structure 40 comprises three free rollers 41 freely rotating around a shaft (with no reference numeral) fixed at positions of 120-degree angles with respect to the tray-side vertical plate 31 and the duct-side vertical plate 32 of the primary filter structure 30, ring-shaped rotary plates 42 (a pair of front and rear ones) each having an inner periphery supported by these free rollers 41, and a substantially cylindrical mesh filter 43 fitted to and between the front and rear rotary plates 42, 42.

In this embodiment, four mesh filters 43 are connected in serial with each other at 144-degree angles by screws 44 to form a semi-circular filter, and a pair of the semi-circular filters are connected by bolts 45 to form a mesh filter unit 43 of a regular-octagonal cross-section. This is only a non-limited example. A single mesh filter member may be used to form a cylindrical mesh filter unit 43. Another polygon other than octagon is also applicable.

The mesh filter 43 has more fine texture than the perforated metal 37 of the primary filter structure 30. By way of example, a stainless mesh filter of 100-200 mesh (75-150 micrometers) may be used. Vanes 46 are fitted to the outer periphery of the mesh filter 43 at suitable positions thereof and at suitable intervals between one another. The washing liquid jetted from cleaning nozzles, described later, will collide with the vanes to thereby rotate the rotary plate 42.

The washing nozzles 50 are arranged substantially just above the secondary filter structure 40. The washing nozzles 50 are connected to a washing fluid pipe 51 extending through a through hole 39 which is formed in vicinity to the upper end of the tray-side vertical plate 31 higher than the filter frame 33 in the first filter structure 30, so that the washing liquid 52 supplied through the washing liquid pipe 51 will be sprayed toward the mesh filter 43 positioned in the uppermost position of the secondary filter structure 40 in a predetermined direction. The cutting fluid 7 collected in the cutting fluid tank 8 may be reused as the washing liquid 52, wherein a circulation pathway may be formed to pump up the cutting fluid to the washing fluid pipe 51.

The operation and function of the above-described filter unit 20 will now be explained. The chips or scrapes 5 that have been thrown into the tray 2 together with the cutting fluid 7 will be conveyed in a rightward direction in Fig.1 by the conveyance spiral 3. The cutting fluid 5 is separated during conveyance and falls down into the cutting fluid tank 8 for collection. When the chips or scrapes are transferred to the exit of the tray 2 and then into the filter unit 20, they will be processed by the perforated metal plates 37 of the primary filter structure 30 and then by the mesh filter 43 of the secondary filter structure 40.

More particularly, the chips or scrapers which have been transferred into the filter unit 20 while being coiled around the conveyance spiral 3 will become in touch with the perforated metal plate 37 arranged with a small gap to the outer periphery of the conveyance spiral 3. The relatively larger chips or scrapes 5A cannot pass through the mesh openings of the perforated metal plate 37 and therefore forcibly scraped by the rotating conveyance spiral which becomes in contact with the perforated metal plate 37, so that they will be moved back to the inside of the conveyance path and conveyed again by the conveyance spiral 3 toward the discharge duct 6. The relatively smaller chips or scrapes 5B (such as sludge) can pass through the perforated metal plate 37 to be thrown to the outside of the primary filter structure 30.

The relatively smaller chips or scrapes 5B which have been thrown to the outside of the primary filter structure 30 will then be processed by the mesh filters 43 of the secondary filter structure 40 arranged outside of the primary filter structure 30.

Thus, the relatively smaller chips or scrapes 5B which have passed through the perforated metal plate 37 will fall by their own weights so that they will be subjected to solid-liquid separation by the lower-positioned mesh filter 43. The cutting fluid 7 adhered to the chips or scrapes 5B can be separated here to be collected in the below-positioned cutting fluid tank 8.

In the meantime, the relatively larger chips or scrapes 5B which cannot pass through the mesh filters 43 will be captured by the lower-positioned mesh filter 43. The rotary plates 42 and the mesh filters 47 in the secondary filter structure 40 are driven by collision of the washing fluid from the washing nozzles 50 with the vane 46 on the outer periphery of the uppermost-positioned mesh filter 43 to always rotate in the predetermined direction (that is a counter-clockwise direction, because the washing fluid 52 is injected from the washing nozzles 50 in the obliquely right-downward direction in Fig.3). By this rotation, the lower-positioned mesh filter (where the relatively smaller chips or scrapes 5B is captured) will be moved to the above little by little. As shown by the arrow 5B in Fig.3, some of the relatively smaller chips or scrapes 5B captured by the said mesh filter will fall down by their own weights during ascending movement thereof. The chips or scrapes 5B which have failed to fall down by their own weights should be subjected to the washing fluid 52 injected from the washing nozzles 50 when the said mesh filter 43 reaches the uppermost position, they will be separated from the said mesh filter to fall down by their own weights and thus conveyed further by the conveyance spiral 3 toward the discharge duct 6.

As described above, among the chips or scrapes 5 coiled around the conveyance spiral 3, the relatively larger chips or scrapes 5A cannot pass the perforated metal plate 37 of the primary filter structure 30 and should be scraped or removed therefrom to be separated from the conveyance spiral 3, which will be again returned to the conveyance path by the conveyance spiral 3. On the other hand, the relatively smaller chips or scrapes 5B passing through the perforated metal plate 37 of the primary filter structure 30 will be caught by the mesh filter 43 of the secondary filter structure 40 and then separated therefrom to fall dawon during ascending movement of the said mesh filter, which will be again returned to the conveyance path by the conveyance spiral 3. Accordingly, both the relatively larger chips or scrapes 5A and the relatively smaller chips or scrapes 5B can be conveyed toward the discharge duct 6 without causing serious clogging.

In addition, the perforated metal plates 37 of the primary filter structure 30 stand at position in close vicinity to the outer periphery of the conveyance spiral 3. Accordingly, even if the metal plate should be clogged with the chips or scrapes 5A, they will soon become in touch with the outer periphery of the conveyance spiral 3 and removed thereby to fall down. This means that a temporal clogging can soon be cancelled, even if it occurs. Further, the mesh filters 43 of the secondary filter structure 40 will always be rotating, and one of the mesh filter reaching the uppermost position will be washed by the washing liquid 52 from the washing nozzles 50. Therefore, the relatively smaller chips or scrapes 5B captured by the mesh filter 43 could be removed therefrom during half-rotation or less to cancel clogging. Accordingly, both the perforated metal plates 37 and the mesh filters 43 will not be faced with serious clogging.

### Embodiment 2

A filter unit 20 according to another embodiment (Embodiment 2) of the present invention will be described in reference to Fig.4. This filter unit 20 has a primary filter structure 30 of a partly different design from the filter unit 20 of Embodiment 1. More specifically, there are two differences, one is that the perforated metal plate 37 has an arcuate section over a predetermined length along the outer peripheral of the conveyance spiral 3, and the other is that a top plate 33a of the filter frame 33 has a wide opening at the center, and inclined or funnel-shaped guide plates 39 are formed at the edges of the opening.

The former difference will contribute to elongation of an area where the relatively longer chips or scrapes 5A entangled with the rotating conveyance spiral 3 could become in touch with the perforated metal plate 37 and thus separated therefrom, and also to improvement of prevention of clogging of the perforated metal plate 37. The latter difference will make it possible to more smoothly return the relatively smaller chips or scrapes 5B captured by the mesh filter 43 of the secondary filter structure 40, to the conveyance path by the conveyance spiral 3, when they fall down during ascending movement of the said mesh filter 43.

Apart from these differences, the filter unit of this embodiment is substantially the same with the filter unit 20 of Embodiment 1 and explanation thereof will be omitted. In Fig.4, the members or elements identical or corresponding to those in the filter unit 20 of Embodiment 1 are shown by the same reference numerals, but some members or elements are shown by omission of their reference numerals.

Although the present invention has been described in detail in reference to the embodiments illustrated in the drawings, it is not limited thereto and may be implemented in various modifications and applications within a scope of the invention as defined by the appended claims.

For example, although the spiral conveyor 10 having a hollow conveyance spiral 3 with no central axis is shown in the illustrated embodiments, the present invention will be applicable also to another type spiral conveyor having a conveyance spiral with a central axis.

Furthermore, although the spiral conveyor 10 shown in the illustrated embodiments is designed such that the discharge duct 6 is connected to the exit of the filter unit 20 so that the chips or scrapes 5 are conveyed in an obliquely upward direction, the present invention will also be applicable to another type spiral conveyor having no discharge duct (or a lift-up duct).

Furthermore, although the spiral conveyor 10 in the illustrated embodiments (and the conventional spiral conveyor 1 of Fig.6) is shown as a type where projecting rails 9, 9 are formed at opposite positions on the inner walls of the curved bottom sections of the tray 2 and the extension tray 21 to extend over the entire length, the spiral conveyor may be of a rail-less type having no rails 9,9 so that the conveyance spiral 3 is in direct contact with a small area extending in a crosswise direction along the lowermost points of the trays 2, 21. When the rail type is employed, the conveyance spiral 3 is supported on the rails 9, 9 while usually being floated to leave a small gap (of the order of 1mm, for example) from the lowermost points of the trays 2, 21 (see Fig.6, no gap is shown in Figs.3 and 4). In other embodiment, the conveyance spiral is in contact with some area including the uppermost point of the trays to leave a small gap (of less than 1mm, for example) from the trays **2, 21.** Means for supporting the conveyance spiral 3 is not directly related to the subject matters of the present invention and, therefore, any supporting means will be applicable to the present invention.

Furthermore, as taught in Patent Document 1, the tray 2 of the spiral conveyor may comprise an outer tray and an inner tray with vibration dampening material interposed therebetween, which will also be applicable to the present invention for achieving vibration dampening effect.

Furthermore, in the illustrated embodiments, the cutting fluid 7 is used as the washing fluid, which is injected from the washing nozzles 50 to the secondary filter (or the mesh filter 43) for eliminating clogging. In another embodiment, air may be injected from the washing nozzles 50.

Furthermore, in the illustrated embodiments, the washing fluid is injected from the washing nozzles 50 in the obliquely right-downward direction toward the secondary filter (or the mesh filter 43), which will collide against the vanes 46 to rotate the secondary filter. This makes it possible to rotate the secondary filter with no need to use any rotation drive means such as motor, which will provide advantages of simplifying, down-sizing and cost-down of the device. However, the washing nozzles 50 may inject the washing liquid just in a downward direction. This will require some rotation drive means for rotating the secondary filter, but the vanes may be omitted. In addition, this will provide more improved effect of separating and removing the relatively smaller chips or scrapes 5B from the secondary filter

The present invention is characterized in that the filter unit 20 is connected between the tray 2 and the discharge duct 6 in the spiral conveyor 10. The filter unit 20 may be incorporated when newly manufacturing the spiral conveyor 10. Alternatively, the filter unit 20 may be afterward incorporated to the existing spiral conveyor (Fig.5) of conventional design wherein the discharge duct 6 is connected to the exit of the tray 2. In this case, in order to prevent the disadvantage relating to the prior art (that is, chips or scrapes 5 may tend to be clogged on the slanting sections 2b, 2b of the tray 2), some design changes should preferably be applied. For example, perforations of the metal plate forming the slanting sections 2b, 2b may be closed, or the perforated metal plate is replaced with a solid plate with no perforation, which is used to form the slanting section having greater inclination.

### Legends

- 1: spiral conveyor
- 2: tray
- 3: conveyance spiral
- 4: motor with deceleration mechanism
- 5: chips or scrapes
- 5A: relatively larger size chips or scrapes
- 5B: relatively smaller size chips or scrapes
- 6: discharge duct
- 7: cutting fluid
- 8: cutting fluid tank
- 9: rail
- 10: spiral conveyor
- 20: filter unit
- 21: extension tray
- 22: tray-side attachment plate
- 23: duct-side attachment plate
- 30: primary filter structure
- 31: tray-side vertical plate
- 32: duct-side vertical plate
- 33: filter frame
- 34: spacer
- 35: bolt
- 36: through hole for bolt
- 37: perforated metal plate (primary filter)
- 38: opening
- 39: guide plate
- 40: secondary filter structure
- 41: free roller (free-rotating roller)
- 42: rotary plate
- 43: mesh filter (secondary filter)
- 44: screw
- 45: bolt
- 46: vane
- 47: direction of rotation of rotary plate and mesh filter
- 50: washing nozzle
- 51: washing liquid pipe
- 52: washing liquid (cutting fluid)

## Claims

1. A spiral conveyor comprising
a tray (2) into which chips or scrapes (5) discharged from a cutting machine are thrown together with cutting fluid (7),
a discharge duct (6) for discharging the chips or scrapes,
a filter unit (20) connected between the tray (2) and the discharge duct (6),
a conveyance spiral (3) mounted within the tray (2) and the filter unit (20) and driven in a predetermined direction for conveying the chips or scrapes in a predetermined direction,
and a cutting fluid tank (8) for receiving the cutting fluid falling down from the tray (2) and the filter unit (20),
the filter unit comprising
a primary filter (30) fixed at a position close to an outer periphery of the conveyance spiral (3),
a secondary filter (40) rotating on the outside of the conveyance spiral (3) and
the primary filter (30), and
washing nozzles (50) for spraying washing liquid onto the secondary filter (40),
wherein the primary filter (30) comprises a pair of filter members (37), each having more rough texture than the secondary filter (40), the pair of filter members arranged in opposite sides of the conveyance spiral (3) with small gaps between the filter members (37) and the outer periphery of the conveyance spiral (3),
wherein the chips or scrapes captured by the primary filter (30) are scraped by the rotating conveyance spiral (3) and delivered back to a conveyance path, whereas the chips or scrapes passing through the primary filter (30) and captured by the secondary filter (40) are removed by the washing nozzles (50) and delivered back to the conveyance path.

2. A spiral conveyor defined in claim 1, **characterized in that** the primary filter (30) comprises a perforated metal (37) and the secondary filter (40) comprises a net of 100-200 mesh (43).

3. A spiral conveyor defined in any one of claims 1 to 2, **characterized in that**
the secondary filter (40) includes plural filter members secured to a ring-shaped rotating disc (42) and free-rotating rollers (41) are positioned in contact with an inner periphery of the rotating disc (42), so that the secondary filter (40) becomes rotatable.

4. A spiral conveyor defined in any one of claims 1 to 3, **characterized in that** one or more vanes (46) are provided on an outer periphery of the secondary filter (40) for receiving the washing liquid sprayed from the washing nozzles (50) to rotate the secondary filter in a predetermined direction.

5. A spiral conveyor defined in claim 4, **characterized in that**
the washing nozzles (50) are arranged substantially just above the secondary filter (40) to spray the washing liquid toward a top of the secondary filter (40) in an obliquely downward direction.

6. A spiral conveyor defined in any one of claims 1 to 5, **characterized in that**
the filter unit (20) is mounted continuously and integrally with an exit of the tray (2).

7. A spiral conveyor defined in any one of claims 1 to 5, **characterized in that**
the filter unit (20) is an independent unit mounted between an exit of the tray (2) and an entrance of the discharge duct (6).

## Patentansprüche

1. Wendelförderer umfassend
eine Wanne (2), in die Späne oder Schabungen (5), die aus einer Schneidmaschine abgeführt werden, mit Schneidfluid (7) zusammengeworfen werden,
einen Abführkanal (6) zum Abführen der Späne oder Schabungen,
eine Filtereinheit (20), die zwischen der Wanne (2) und dem Abführkanal (6) verbunden ist,
eine Förderwendel (3), die innerhalb der Wanne (2) und der Filtereinheit (20) montiert ist und in eine zuvor bestimmte Richtung zum Fördern der Späne oder Schabungen in eine zuvor bestimmte Richtung angetrieben wird,
und einen Schneidfluidtank (8) zum Aufnehmen des Schneidfluids, das von der Wanne (2) und der Filtereinheit (20) herabfällt, die Filtereinheit umfassend einen Primärfilter (30), der an einer Position nahe einem Außenumfang der Förderwendel (3) befestigt ist,
einen Sekundärfilter (40), der auf der Außenseite der Förderwendel (3) rotiert, und
den Primärfilter (30) und Waschdüsen (50) zum Sprühen von Waschflüssigkeit auf den Sekundärfilter (40),
wobei der Primärfilter (30) ein Paar Filterelemente (37), die jedes eine rauere Textur als der Sekundärfilter (40) aufweist, umfasst, wobei das Paar Filterelemente auf gegenüberliegenden Seiten der Förderwendel (3) mit kleinen Spalten zwischen den Filterelementen (37) und dem Außenumfang der Förderwendel (3) angeordnet ist,
wobei die Späne oder Schabungen, die durch den Primärfilter (30) aufgefangenen werden, durch die rotierende Förderwendel (3) abgeschabt und zu einem Förderweg zurückgeführt werden, während die Späne oder Schabungen, die durch den Primärfilter (30) hindurchtreten und durch den Sekundärfilter (40) aufgefangen werden, durch die Waschdüsen (50) entfernt und zu dem Förderweg zurückgeführt werden.

2. Wendelförderer definiert in Anspruch 1, **dadurch gekennzeichnet, dass** der Primärfilter (30) ein perforiertes Metall (37) umfasst und der Sekundärfilter (40) ein Netz von 100-200 Mesh (43) umfasst,

3. Wendelförderer definiert in einem der Ansprüche 1 bis 2,
**dadurch gekennzeichnet, dass**
der Sekundärfilter (40) vielzählige Filterelemente, die an einer ringförmigen rotierenden Scheibe (42) gesichert sind, einschließt, und frei rotierende Rollen (41) in Kontakt mit einem Innenumfang der rotierenden Scheibe (42) positioniert sind, sodass der Sekundärfilter (40) rotierbar wird.

4. Wendelförderer definiert in einem der Ansprüche 1 bis 3,
**dadurch gekennzeichnet, dass**
eine oder mehrere Schaufeln (46) auf einem Außenumfang des Sekundärfilters (40) zum Aufnehmen der Waschflüssigkeit, die von den Waschdüsen (50) gesprüht wird, bereitgestellt sind, um den Sekundärfilter in eine zuvor bestimmte Richtung zu rotieren.

5. Wendelförderer nach Anspruch 4, **dadurch gekennzeichnet, dass**
die Waschdüsen (50) im Wesentlichen unmittelbar über dem Sekundärfilter (40) angeordnet sind, um die Waschflüssigkeit in eine schräg nach unten verlaufenden Richtung zu einer Oberseite des Sekundärfilters (40) zu sprühen.

6. Wendelförderer definiert in einem der Ansprüche 1 bis 5,
**dadurch gekennzeichnet, dass**
die Filtereinheit (20) durchgehend und einstückig an einem Auslass der Wanne (2) montiert ist.

7. Wendelförderer definiert in einem der Ansprüche 1 bis 5,
**dadurch gekennzeichnet, dass**
die Filtereinheit (20) eine unabhängige Einheit ist, die zwischen einem Auslass der Wanne (2) und einem Einlass des Abführkanals (6) montiert ist.

## Revendications

1. Transporteur en spirale comprenant
un plateau (2) dans lequel des copeaux ou des raclures (5) évacués d'une machine de coupe sont jetés conjointement avec du fluide de coupe (7),
un conduit d'évacuation (6) pour évacuer les copeaux ou les raclures,
une unité de filtre (20) reliée entre le plateau (2) et le conduit d'évacuation (6),
une spirale de transport (3) montée à l'intérieur du plateau (2) et de l'unité de filtre (20) et entraînée dans une direction prédéterminée pour acheminer les copeaux ou les raclures dans une direction prédéterminée,
et un réservoir de fluide de coupe (8) pour recevoir le fluide de coupe tombant du plateau (2) et de l'unité de filtre (20), l'unité de filtration comprenant un filtre primaire (30) fixé à une position proche d'une périphérie externe de la spirale de transport (3),
un filtre secondaire (40) tournant à l'extérieur de la spirale de transport (3) et
le filtre primaire (30), et des buses de lavage (50) pour pulvériser du liquide de lavage sur le filtre secondaire (40),
dans lequel le filtre primaire (30) comprend une paire d'éléments filtrants (37), chacun présentant une texture plus rugueuse que le filtre secondaire (40), la paire d'éléments filtrants étant agencée sur des côtés opposés de la spirale de transport (3) avec de petits espaces entre les éléments filtrants (37) et la périphérie externe de la spirale de transport (3),
dans lequel les copeaux ou raclures capturés par le filtre primaire (30) sont raclés par la spirale de transport rotative (3) et ramenés vers un trajet de transport, tandis que les copeaux ou raclures traversant le filtre primaire (30) et capturés par le filtre secondaire (40) sont retirés par les buses de lavage (50) et ramenés vers le trajet de transport.

2. Transporteur en spirale selon la revendication 1, **caractérisé en ce que** le filtre primaire (30) comprend un métal perforé (37) et le filtre secondaire (40) comprend un filet de 100 à 200 mailles (43),

3. Transporteur en spirale selon l'une quelconque des revendications 1 à 2,
**caractérisé en ce que**
le filtre secondaire (40) comporte plusieurs éléments filtrants fixés à un disque rotatif de forme annulaire (42) et des rouleaux à rotation libre (41) sont positionnés en contact avec une périphérie interne du disque rotatif (42), de sorte que le filtre secondaire (40) devient rotatif.

4. Transporteur en spirale selon l'une quelconque des revendications 1 à 3,
**caractérisé en ce que**
une ou plusieurs pales (46) sont prévues sur une périphérie externe du filtre secondaire (40) pour recevoir le liquide de lavage pulvérisé par les buses de lavage (50) afin de faire tourner le filtre secondaire dans une direction prédéterminée.

5. Transporteur en spirale selon la revendication 4, **caractérisé en ce que**
les buses de lavage (50) sont agencées sensiblement juste au-dessus du filtre secondaire (40) pour pulvériser le liquide de lavage vers un sommet du filtre secondaire (40) dans une direction obliquement vers le bas.

6. Transporteur en spirale selon l'une quelconque des revendications 1 à 5,
**caractérisé en ce que**
l'unité de filtre (20) est montée en continu et d'un seul tenant avec une sortie du plateau (2).

7. Transporteur en spirale selon l'une quelconque des revendications 1 à 5,
**caractérisé en ce que**
l'unité de filtre (20) est une unité indépendante montée entre une sortie du plateau (2) et une entrée du conduit d'évacuation (6).
